# FASCICULE DE BREVET EUROPEEN

(11) **EP 2 935 133 B1**
(45) Date de publication et mention de la délivrance du brevet: **10.05.2017**
(21) Numéro de dépôt: 13815060.2
(22) Date de dépôt: 05.12.2013
(51) Int. Cl.: C03B 5/235, C03B 5/237, F23L 15/04, F23R 3/00, F25J 3/04, F27D 17/00, F02C 1/05, F23L 7/00, F23L 15/02

(54) **RECUPERATION ENERGETIQUE DES FUMEES D'UN FOUR DE FUSION AU MOYEN D'UNE TURBINE A GAZ ET DES ÉCHANGEURS DE CHALEUR**
ENERGIERÜCKGEWINNUNG AUS RAUCHGAS AUS EINEM SCHMELZOFEN MIT EINER GASTURBINE UND WÄRMETAUSCHERN
ENERGY RECOVERY FROM FUMES FROM A MELTING FURNACE USING A GAS TURBINE AND HEAT EXCHANGERS

(30) Priorité: 20.12.2012 FR 1262376
(43) Date de publication de la demande: 28.10.2015
(73) Titulaire: L'Air Liquide Société Anonyme pour l'Etude et l'Exploitation des Procédés Georges Claude, 75007 Paris (FR)
(72) Inventeur: DAVIDIAN, Benoit, F-94100 Saint Maur Des Fosses (FR); JOUMANI, Youssef, F-78121 Crespieres (FR); LE DIRACH, Jocelyn, F-78000 Versailles (FR); TRANIER, Jean-Pierre, F-94240 L'hay-les-Roses (FR)
(74) Mandataire: De Vleeschauwer, Natalie Y.L.D.
(86) Numéro de dépôt international: PCT/FR2013/052958
(87) Numéro de publication internationale: WO 2014/096613

(56) Documents cités:
- US-A- 4 030 877
- US-A- 4 528 012
- US-A1- 2012 135 362

## Description

Dans un four de fusion, les matières premières sont transformées en matière fondue grâce à un apport d'énergie thermique qui est généralement pour au moins une partie fournie par combustion.

La partie majeure de l'énergie thermique générée par les flammes est transférée à la charge (matières premières solides et matière fondue). Toutefois, de l'énergie résiduelle est évacuée du four avec les fumées de combustion.

Dans le cas d'un four de fusion en aéro-combustion, ou combustion à l'air, il est ainsi connu d'utiliser des échangeurs à contre-courant alterné composés de céramiques (régénérateurs) ou des échangeurs en acier (récupérateurs) pour préchauffer l'air de combustion en amont du four, de manière à augmenter non seulement le rendement de la combustion dans le four mais aussi celui de l'installation dans sa totalité dans la mesure où une partie de l'énergie thermique contenue dans les fumées évacuées est récupérée et utilisée comme énergie de préchauffage pour l'air de combustion.

Dans un four à verre à récupérateurs, l'air de combustion est préchauffé à 700°C tandis que les régénérateurs permettent d'atteindre des températures d'air de combustion de 1200°C voire 1250°C en début de vie de l'installation.

Les opérateurs des fours de fusion, et notamment les verriers, adoptent de plus en plus de l'oxy-combustion, technologie à la fois plus efficace (car éliminant le ballast thermique de l'azote), et moins polluante (réduction des NOx et du CO₂, ce même azote étant à l'origine des NOx formés).

Cependant, les systèmes de récupération d'énergie des fumées développés pour l'aéro-combustion (régénérateurs et récupérateurs) ne sont généralement pas adaptés pour la récupération d'énergie thermique des fumées générées par l'oxy-combustion.

EP-A-1338848 décrit un système de récupération d'énergie des fumées d'un four à verre, et en particulier d'un four à verre en oxy-combustion. Ledit système comprend au moins un échangeur de chaleur pour le préchauffage d'un gaz riche en oxygène et/ou d'un combustible gazeux par échange thermique avec les fumées évacuées du four, une chaudière située en aval du au moins un échangeur de chaleur et apte à générer de la vapeur surchauffée par échange thermique avec les fumées et une turbine à vapeur pour l'expansion de la vapeur surchauffée avec production d'énergie mécanique.

Selon EP-A-1338848, l'énergie mécanique générée par la turbine peut être utilisée pour fournir au moins une partie des besoins énergétiques d'une installation de séparation des gaz de l'air qui fournit de l'oxygène de combustion pour le four à verre.

Pour la production de vapeur surchauffée dans la chaudière avec une efficacité industriellement acceptable, les fumées à l'entrée de la chaudière, et donc aussi à la sortie de l'échangeur de chaleur, doivent présenter une température d'au moins 1000°C, voire de 1200°C à 1500°C.

Malgré les bonnes résistances à de telles températures des matériaux identifiés dans EP-A-1338848, les verriers préfèrent utiliser des systèmes de récupération d'énergie à plus basse température estimés plus durables.

Un tel système alternatif particulièrement fiable pour la récupération d'énergie des fumées d'un four à verre à oxy-combustion est décrit dans EP-A-0872690.

Selon EP-A-0872690, les fumées issues du four à oxy-combustion sont utilisées pour le préchauffage indirect de l'oxygène et/ou du combustible en amont du four. Dans un premier échangeur de chaleur, les fumées issues du four chauffent un fluide intermédiaire, tel que par exemple de l'air, par échange thermique entre les deux fluides. Le fluide intermédiaire chauffé issu du premier échangeur est utilisé dans un deuxième échangeur thermique pour chauffer de l'oxygène de combustion et/ou le combustible.

Le système de récupération d'énergie des fumées selon EP-A-0872690 ne permet toutefois pas une récupération supplémentaire d'énergie des fumées sous forme de vapeur surchauffée, comme c'est le cas dans EP-A-1338848, du fait qu'en pratique les fumées à la sortie du premier échangeur présentent une température nettement inférieure à 1000°C. Le document US 2012/135362A1 représente l'état de la technique le plus proche aux revendications 1 et 7 et décrit les caractéristiques des préambules de ces revendications.

La présente invention a pour objectif d'accroitre l'efficacité de récupération de chaleur sur les fumées d'un four de fusion utilisant un combustible gazeux et/ou de l'oxygène comme comburant et dans lequel de l'oxygène de combustion et/ou du combustible gazeux sont préchauffés par échange de chaleur indirecte avec les fumées évacuées du four.

La présente invention concerne plus particulièrement un procédé de fusion dans un four comportant une chambre de fusion. Selon ce procédé, on préchauffe de l'oxygène de combustion et/ou du combustible gazeux dans un échangeur de chaleur dit échangeur primaire en amont de la chambre de fusion par échange thermique avec un gaz caloporteur.

On utilise l'oxygène de combustion et/ou le combustible gazeux préchauffé pour chauffer la chambre de fusion au moyen de combustion, générant ainsi de l'énergie thermique et des fumées dans la chambre de fusion.

On évacue les fumées de la chambre de fusion et on les introduit dans un échangeur de chaleur, dit échangeur secondaire, pour chauffer de l'air comprimé par échange thermique avec les fumées évacuées de la chambre de fusion.

Suivant l'invention, on utilise l'air comprimé chauffé issu de l'échangeur secondaire en tant que comburant dans une turbine à gaz. Cette turbine à gaz génère ainsi de l'énergie mécanique et/ou électrique et un effluent gazeux. Ledit effluent gazeux de la turbine à gaz est utilisé comme gaz caloporteur pour le préchauffage de l'oxygène de combustion et/ou du combustible gazeux dans l'échangeur primaire.

On préchauffe avantageusement au moins de l'oxygène de combustion et, de préférence, également du combustible gazeux, dans l'échangeur primaire. En effet, du fait que, suivant l'invention, on chauffe le réactif de combustion par échange de chaleur indirecte avec les fumées, c'est-à-dire à travers un fluide caloporteur, la présente invention est particulièrement apte et fiable pour le préchauffage d'oxygène.

On observe, suivant l'invention, une synergie significative entre, d'une part, le système de récupération d'énergie thermique des fumées issues de la chambre de fusion et, d'autre part, la turbine à gaz, En effet, on constate un rendement énergétique nettement au-dessus du rendement énergétique à prévoir pour une simple combinaison d'une turbine à gaz avec du préchauffage d'oxygène de combustion et/ou de combustible gazeux au moyen des fumées.

Il est à noter que la combustion n'est pas nécessairement le seul moyen de chauffage de la chambre de fusion, qui peut comporter d'autres moyens de chauffage tels que des électrodes.

L'oxygène de combustion préchauffé peut être le seul comburant utilisé pour la combustion dans la chambre de fusion ou en combinaison avec un autre comburant, typiquement de l'air.

Le four peut ainsi être un four d'oxycombustion (dont l'oxygène est le seul comburant), un four à combustion enrichi (avec comme comburant de l'air enrichi en oxygène), ou encore un four à oxydant mixte (utilisant une combinaison d'une part, de combustion avec de l'oxygène et d'autre part, de combustion avec de l'air, éventuellement enrichi en oxygène).

Dans le présent contexte, le terme « oxygène » se réfère à un gaz ayant une teneur en O₂ d'au moins 75% vol, de préférence entre 80% vol et 100% vol, et encore de préférence entre 90% vol et 100% vol.

De manière analogue, le combustible gazeux préchauffé peut être le seul combustible utilisé pour la combustion dans la chambre de fusion ou le combustible gazeux préchauffé peut être utilisé en combinaison avec un autre combustible.

L'énergie mécanique et/ou électrique générée par la turbine à gaz peut au moins en partie être fournie à un ou plusieurs compresseurs d'air. Le ou les compresseurs d'air sont notamment choisis parmi : un compresseur d'air qui alimente l'échangeur de chaleur secondaire, un compresseur d'air qui alimente une unité de séparation des gaz de l'air et un autre compresseur d'air. En effet, non seulement l'installation de fusion est équipée d'un compresseur d'air, souvent appelé soufflante, pour la fourniture d'air comprimé à l'échangeur secondaire, mais en plus l'installation peut également comprendre une unité de séparation des gaz de l'air et/ou d'autres unités consommatrices d'air comprimé. L'installation peut notamment comprendre une unité de séparation des gaz de l'air qui fournit l'oxygène de combustion, des installations de refroidissement à air comprimé, etc.

Suivant une forme de réalisation du procédé, la turbine à gaz fournit entre 75% et 100%, de préférence 100% de la consommation énergétique du compresseur d'air qui alimente l'échangeur de chaleur secondaire en air comprimé.

De préférence, la turbine à gaz fournit entre 25% et 100%, de préférence entre 50% et 100%, et en particulier 100% de la consommation énergétique du compresseur d'air qui alimente l'unité de séparation des gaz de l'air. Cette unité de séparation des gaz de l'air génère de préférence de l'oxygène de combustion pour le procédé de fusion. L'unité de séparation des gaz de l'air peut notamment comporter une colonne à distillation cryogénique des gaz de l'air, mais d'autres types d'unités de séparation des gaz de l'air sont également envisageables. L'unité de séparation des gaz de l'air peut notamment être un système basé sur la technique dite VSA (Vacuum Swing Absorption).

Il est utile de prévoir un réservoir d'oxygène liquide comme source d'oxygène de combustion lors d'un arrêt ou d'une réduction de la production d'oxygène de combustion par l'unité de séparation des gaz de l'air. Quand l'unité de séparation est alimentée en énergie par la turbine à gaz, un tel arrêt ou une telle réduction de l'unité de séparation peut notamment se produire lors d'une mise hors opération pour maintenance de la turbine à gaz. Un tel réservoir d'oxygène présente un volume de stockage permettant l'alimentation en oxygène de combustion à une capacité de la chambre de fusion pendant 6 à 8 heures lors d'un arrêt de l'unité de séparation des gaz de l'air. Il est également utile de prévoir une source auxiliaire d'énergie, telle qu'un groupe électrogène, pour fournir de l'énergie mécanique et/ou de l'énergie électrique à utiliser lors d'un arrêt de la turbine à gaz.

Les paramètres du procédé dépendent de la matière à fondre, telle que du verre, du métal, de l'émail, etc., de la taille et du type de la chambre de fusion, du débit de matière fondue, etc.

Les paramètres d'opération suivants ont été identifiés comme avantageux, seuls ou en combinaison, notamment, mais pas uniquement, quand le procédé est un procédé de fusion de verre :
- la température des fumées à l'entrée de l'échangeur secondaire est de 1000°C à 2000°C,
- l'air comprimé est à une pression de 10 à 20 atm à l'entrée de l'échangeur secondaire,
- la température de l'air comprimé chauffé à la sortie de l'échangeur secondaire est de 600°C à 800°C,
- la température de l'effluent gazeux à la sortie de la turbine à gaz est de 600°C à 800°C.

De manière utile, on utilise, comme carburant pour la turbine à gaz, une partie du combustible gazeux préchauffé issu de l'échangeur primaire.

La présente invention concerne également une installation de fusion adaptée pour la mise en oeuvre de l'une quelconque des formes de réalisation du procédé suivant l'invention.

Ainsi, l'invention concerne une installation de fusion qui comporte un four définissant une chambre de fusion chauffée par combustion. La chambre de fusion comporte également au moins une sortie de fumées pour l'évacuation des fumées générées par cette combustion.

L'installation comporte également un échangeur de chaleur primaire pour le préchauffage, par échange thermique avec un fluide caloporteur, d'oxygène de combustion et/ou de combustible gazeux en amont de la chambre de fusion. Ledit échangeur primaire présente (a) une entrée de fluide caloporteur (chaud) et une sortie de fluide caloporteur (tempéré) et (b) une entrée d'oxygène de combustion (pour l'oxygène de combustion à préchauffer) et une sortie d'oxygène de combustion (pour l'oxygène de combustion préchauffé) et/ou une entrée de combustible gazeux (pour du combustible gazeux à préchauffer) et une sortie de combustible gazeux (pour le combustible gazeux préchauffé).

L'échangeur primaire présente de manière utile une entrée et une sortie d'oxygène de combustion et de préférence également une entrée et une sortie de combustible gazeux.

L'installation de fusion comporte aussi un échangeur de chaleur secondaire pour le chauffage d'air comprimé par échange thermique avec les fumées issues de la chambre de fusion. Ledit échangeur secondaire présente (a) une entrée d'air comprimé (pour l'air comprimé à chauffer) et une sortie d'air comprimé (pour l'air comprimé chauffé) et (b) une entrée de fumées (chaudes) et une sortie de fumées (tempérées).

L'installation de fusion est équipée d'un premier compresseur d'air relié à l'entrée d'air comprimé de l'échangeur secondaire de manière à permettre la fourniture par le premier compresseur d'air comprimé à l'échangeur secondaire.

En règle générale, dans le présent contexte, le terme « relié » est utilisé au sens de « fluidiquement relié », par exemple au moyen d'une canalisation.

L'entrée de fumées de l'échangeur primaire est reliée à au moins une sortie de fumées de la chambre de fusion. La sortie d'oxygène de combustion de l'échangeur primaire est reliée à au moins un injecteur de comburant de la chambre de fusion et/ou la sortie de combustible gazeux de l'échangeur primaire est reliée à au moins un injecteur de combustible de la chambre de fusion.

Suivant l'invention, l'installation comporte également une turbine à gaz avec une tuyère d'admission d'air et un échappement. La sortie d'air comprimé de l'échangeur secondaire est reliée à la tuyère d'admission d'air de la turbine à gaz. L'échappement de la turbine à gaz est relié à l'entrée de fluide caloporteur de l'échangeur primaire de manière à permettre la fourniture du gaz d'échappement de la turbine à gaz comme fluide caloporteur à l'échangeur primaire.

Suivant une forme de réalisation préférée de l'installation, la turbine à gaz fournit de l'énergie mécanique et/ou électrique à au moins un compresseur d'air. La turbine à gaz peut notamment fournir de l'énergie mécanique et/ou électrique à au moins un compresseur d'air choisi parmi : le premier compresseur d'air, un compresseur d'air qui alimente une unité de séparation des gaz de l'air et un autre compresseur d'air, tel qu'un compresseur d'air, dit « second compresseur » qui fournit de l'air comprimé à au moins une autre unité de l'installation consommatrice d'air comprimé.

Quand la turbine à gaz fournit de l'énergie mécanique à au moins un compresseur d'air, ceci est avantageusement réalisé au moyen d'un arbre de transmission reliant la turbine à gaz audit compresseur d'air.

Quand l'installation suivant l'invention comporte une unité de séparation des gaz de l'air, celle-ci présente de préférence une sortie d'oxygène reliée à la chambre de fusion pour la fourniture d'oxygène de combustion à ladite chambre par l'unité de séparation des gaz. Pour cette fourniture d'oxygène de combustion, la sortie d'oxygène de l'unité de séparation des gaz de l'air est, de préférence, reliée à l'entrée d'oxygène de combustion de l'échangeur primaire. La sortie d'oxygène de l'unité de séparation des gaz de l'air est alors reliée à la chambre de fusion par le biais de l'échangeur primaire dont la sortie d'oxygène de combustion est reliée à ladite chambre de fusion.

Ainsi, cette sortie d'oxygène de l'unité de séparation peut être reliée à un ou plusieurs injecteurs de comburant dont est équipée la chambre de fusion directement ou, de préférence, à travers l'échangeur primaire.

Comme indiqué ci-dessus, l'unité de séparation des gaz de l'air comporte de préférence une colonne à distillation cryogénique des gaz de l'air, mais peut également être une installation de type VSA.

L'installation comporte avantageusement également un réservoir d'oxygène comme source d'oxygène de combustion lors d'un arrêt ou d'une productivité réduite de l'unité de séparation des gaz de l'air. L'installation peut également, de manière utile, comporter une source auxiliaire d'énergie mécanique et/ou d'énergie électrique, tel qu'un groupe électrogène, pour la fourniture d'énergie mécanique et/ou électrique lors d'un arrêt de la turbine à gaz.

Comme indiqué précédemment, la combustion peut être le seul moyen de chauffage de la chambre de fusion ou peut être combinée avec d'autres systèmes de chauffage tels que des électrodes.

L'oxygène de combustion (chaud) peut être le seul comburant ou peut être combiné avec d'autres comburants, tels qu'en particulier de l'air. Le combustible gazeux peut être le seul combustible ou peut être combiné avec d'autres combustibles.

Un injecteur de comburant relié à la sortie d'oxygène de combustion de l'échangeur primaire peut faire partie d'un brûleur de la chambre de fusion. Un tel injecteur d'oxygène peut également faire partie d'une lance de comburant de la chambre de fusion et en particulier d'une lance d'oxygène.

De manière analogue, un injecteur de combustible gazeux relié à la sortie de combustible gazeux de l'échangeur primaire peut faire partie d'un brûleur de la chambre de fusion ou peut être intégré dans une lance de combustible de ladite chambre.

Suivant une forme de réalisation préférée, le four de fusion est un four à verre, et en particulier un four à verre de type four float (c'est-à-dire comportant un bain de flottage, également appelé bain de métal), mais l'invention est également utile pour d'autres fours à fusion, y compris des fours de fusion de métaux tels que par exemple, les métaux non-ferreux.

L'utilisation d'une installation de fusion suivant l'une quelconque des formes de réalisation décrites ci-dessus dans un procédé suivant l'invention est également couverte.

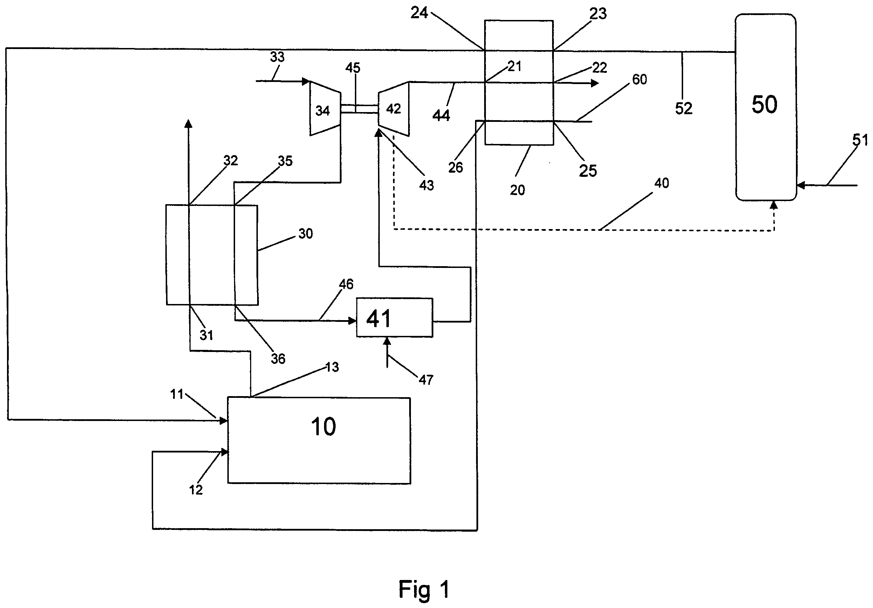

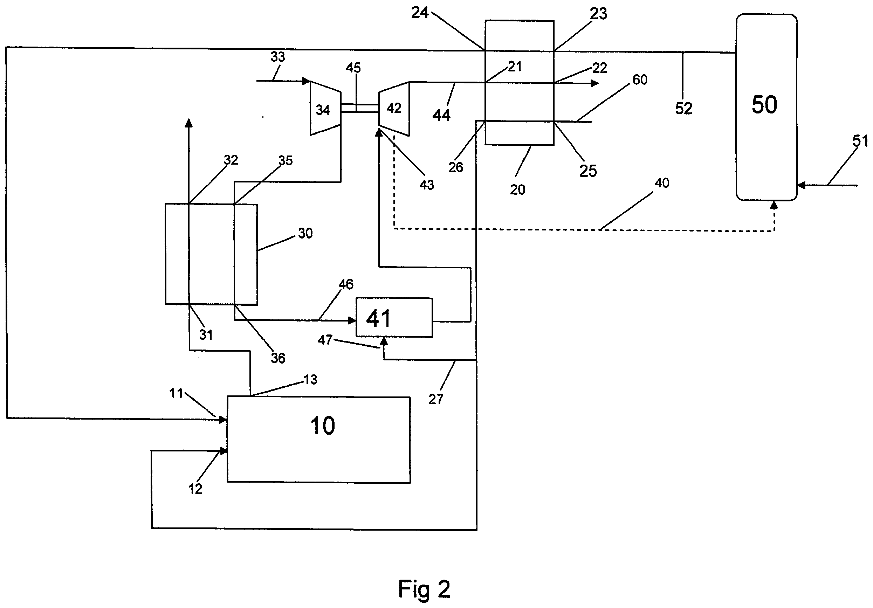

La présente invention et ses avantages sont décrits plus en détail ci-après en se référant aux figures 1 et 2.

Les figures 1 et 2 sont des représentations schématiques de deux exemples d'une installation et d'un procédé suivant l'invention.

Le four de fusion 10 est un four à oxy-combustion, chauffé par un nombre d'oxy-brûleurs (non représentés). Lesdits brûleurs sont alimentés en combustible, tel que par exemple le gaz naturel, par le conduit 12 et en oxygène de combustion par le conduit 11.

L'oxygène de combustion est généré par une unité de séparation des gaz de l'air 50 qui sépare de l'air comprimé 51 en un flux d'oxygène 52, ayant une teneur en O₂ d'au moins 90%vol, et un flux (non représenté) consistant principalement de N₂.

Les fumées générées par l'oxy-combustion dans le four 10 sont évacuées de la chambre de fusion par la sortie 13, lesdites fumées ayant une température entre 1000°C et 2000°C, par exemple entre 1250°C et 1750°C.

Lesdites fumées sont amenées vers un échangeur thermique, dit « échangeur de chaleur secondaire » 30. Les fumées chaudes entrent dans l'échangeur secondaire par une entrée de fumées 31 et sortent par la sortie de fumées 32. A l'intérieur de l'échangeur secondaire 30, les fumées chauffent de l'air comprimé par échange thermique, l'air comprimé étant obtenu par compression d'air ambiant 33 à une pression entre 10 et 20 atm, par exemple à environ 15 atm, dans le compresseur 34. Le compresseur 34 peut également fournir de l'air comprimé à l'unité de séparation des gaz de l'air 50. L'unité 50 peut aussi avoir un compresseur d'air (non représenté) spécifiquement dédié à la fourniture d'air à l'unité 50.

L'air comprimé est introduit dans l'échangeur secondaire 30 par une entrée d'air 35. L'air chauffé sort de l'échangeur secondaire 30 par la sortie d'air 36 à une température entre 600°C et 800°C.

Suivant l'invention, l'air chauffé issu de l'échangeur secondaire 30 est utilisé pour générer de l'énergie mécanique et/ou électrique selon le principe de fonctionnement d'une turbine à gaz.

Ainsi, l'air chauffé est introduit dans une chambre de fusion 41 par la tuyère d'admission d'air. Dans la chambre de fusion 41, l'air chauffé est utilisé pour brûler du combustible (gazeux) introduit par l'admission de combustible 47. Les gaz de combustion ainsi obtenus ont une température de 1000°C à 1600°C, par exemple entre 1200°C et 1400°C, et sont envoyés vers l'entrée 43 d'une turbine d'expansion 42.

Dans les cas illustrés, l'énergie obtenue par cette expansion des gaz de combustion est transmise :
- d'une part au compresseur d'air 34 sous forme d'énergie mécanique par l'arbre de transmission 45, et
- d'autre part à l'unité de séparation 50 sous forme d'énergie électrique par la connexion 40.

A la sortie ou échappement de la turbine d'expansion 42, les gaz de combustion 44 ont une température de 550°C à 750°C. Ces gaz de combustion 44 sont introduits dans un deuxième échangeur thermique, dit « échangeur primaire » 20 par l'entrée de fluide caloporteur 21 et sortent de l'échangeur primaire 20 par la sortie de fluide caloporteur 22.

Un seul échangeur primaire 20 est montré dans les figures. Toutefois, ledit échangeur primaire 20 peut se décomposer en une série de plusieurs sous-échangeurs primaires, c'est-à dire une série d'échangeurs fluide caloporteur / oxygène de combustion et/ou d'échangeurs fluide caloporteur / combustible gazeux.

Le flux d'oxygène 52 issu de l'unité de séparation 50 est introduit dans l'échangeur primaire 20 par l'entrée d'oxygène 23 et sort de l'échangeur primaire en tant qu'oxygène préchauffé par la sortie d'oxygène 24. Un flux de gaz naturel 60 est introduit dans l'échangeur primaire 20 par l'entrée de combustible 25 et sort de l'échangeur primaire en tant que gaz naturel préchauffé par la sortie de combustible 26. A l'intérieur de l'échangeur primaire 20, le flux d'oxygène 52 est préchauffé à une température entre 350°C et 650°C, par exemple à 550°C, par échange thermique avec les gaz de combustion et le flux de gaz naturel 60 est préchauffé à une température entre 250°C et 550°C, par exemple à 450°C, également par échange thermique avec les gaz de combustion.

L'oxygène ainsi préchauffé est transporté en tant qu'oxygène de combustion vers le four 10 par le conduit 11 et le gaz naturel ainsi préchauffé est transporté en tant que combustible vers le four 10 par le conduit 12.

La forme de réalisation illustrée dans la figure 2 se distingue de celle de la figure 1 en ce que, dans la figure 2, on utilise une partie du gaz naturel préchauffé en tant que combustible dans la chambre de fusion 41.

### Exemple

La présente invention et ses avantages sont illustrés dans l'exemple comparatif ci-après.

L'exemple suivant l'invention correspond au schéma de la figure 1.

La référence correspond au même schéma, si ce n'est qu'elle ne comporte pas de chambre de fusion 41 ni de turbine d'expansion 42 telles que décrites ci-dessus, c'est-à-dire qu'elle ne comporte pas de turbine à gaz.

Le four est un four de fusion de verre chauffé par oxy-combustion uniquement avec une consommation d'oxygène de 7000 Nm³/h et une production d'environ 620 t/j de verre.

La consommation électrique de l'unité de séparation des gaz de l'air est estimée à 3 MWe.

Dans l'échangeur primaire, l'oxygène est préchauffé à 550°C et le gaz naturel est préchauffé à 450°C.

Dans l'échangeur primaire, l'air comprimé à 15 atm est chauffé à 350°C.

Dans l'exemple suivant l'invention, les gaz de combustion sortent de la chambre de fusion 41 à la température de 1300°C.

Le bilan électrique est défini en prenant en compte deux postes de consommation :
▪ Les étages de compression de l'unité de séparation 50, et;
▪ Les étages de compression de l'air caloporteur;

Comme poste de génération d'énergie est considéré :
▪ La détente des gaz de combustion dans la turbine d'expansion 42

Les bilans matière et énergie calculés montrent que l'invention est capable de générer toute l'énergie nécessaire pour la production du flux d'oxygène par l'unité de séparation, voire même de dégager un excédent d'énergie, moyennant néanmoins une consommation de gaz naturel.

Le tableau résume les résultats des consommations énergétiques.

**Tableau 1 : bilans énergétiques et consommations de gaz naturel associées**

| | référence | invention |
|---|---|---|
| Bilan électrique (kWe) | -2991 | 1384 |
| Consommation supplémentaire de gaz naturel (Nm3/h) | 00,00 | 686,80 |

Deux scénarios sont à envisager :
- un scénario où le prix de l'électricité est comparable à celui du gaz (€/MWh),
- un scénario où le prix de l'électricité est au moins trois fois celui du gaz (€/MWh)

Les coûts opératoires incluent la consommation d'électricité et de gaz naturel.

Le ratio d'investissement est calculé sur la base d'un amortissement sur 4 ans avec une disponibilité de l'équipement de 8600 heures/an.

Le tableau 2 fournit les données économiques issues de ces bilans matière et énergie, sur la base des prix de gaz naturel et d'électricité suivants : gaz naturel à 40€/MWh et électricité à 70€/MWh.

**Tableau 2 : calcul du coût d'investissement (scénario 1)**

| | référence | invention |
|---|---|---|
| Bilan électrique (kWe) | -2991 | 1384 |
| OPEX (EUR/h) | 209,37 | 159,82 |
| Investissement additionnel (EUR/kWh) | | 390 |

Pour le scénario 2 où le gaz naturel est à 40€7MWh et l'électricité à 140€/MWh, les données économiques sont présentées en tableau 3 :

**Tableau 3 : calcul du coût d'investissement (scénario 2)**

| | référence | invention |
|---|---|---|
| Bilan électrique (kWe) | -2991 | 1384 |
| OPEX (EUR/h) | 418,74 | 62,92 |
| Investissement additionnel (EUR/kWh) | | 2798 |

## Revendications

1. Procédé de fusion dans un four (10) comportant une chambre de fusion, procédé dans lequel :
• on préchauffe au moins un réactif de combustion choisi parmi de l'oxygène (52) et du combustible gazeux (60) en amont de la chambre de fusion du four (10) par échange thermique avec un gaz caloporteur (44) dans un échangeur de chaleur primaire (20), avec obtention d'au moins un réactif de combustion préchauffé et du gaz caloporteur tempéré,
• on chauffe la chambre de fusion du four (10) au moyen de combustion en utilisant au moins un réactif de combustion (52, 60) préchauffé, générant ainsi de l'énergie thermique et des fumées dans la chambre de fusion du four (10),
• on évacue les fumées de la chambre de fusion du four (10) et on les introduit dans un échangeur de chaleur secondaire (30) pour chauffer de l'air comprimé par échange thermique avec les fumées évacuées de la chambre de fusion du four (10),
**caractérisé en ce que**:
• on génère de l'énergie mécanique et/ou électrique et un effluent gazeux au moyen d'une turbine à gaz (41, 42) en utilisant l'air comprimé chauffé (46) issu de l'échangeur secondaire (30) en tant que comburant pour la turbine à gaz (41, 42), et
• on utilise l'effluent gazeux de la turbine à gaz (41, 42) comme gaz caloporteur (44) pour le préchauffage de l'oxygène de combustion (52) et/ou du combustible gazeux (60) dans l'échangeur primaire (20).

2. Procédé suivant la revendication précédente, dans lequel l'énergie mécanique et/ou électrique générée par la turbine à gaz (41, 42) est au moins en partie fournie à un ou plusieurs compresseurs d'air (34).

3. Procédé suivant la revendication 2, dans lequel au moins une partie de l'énergie mécanique et/ou électrique générée par la turbine à gaz (41, 42) est fournie à au moins un compresseur d'air choisi parmi : un compresseur d'air (34) qui alimente l'échangeur de chaleur secondaire (30), un compresseur d'air qui alimente une unité de séparation des gaz de l'air (50) et un autre compresseur d'air.

4. Procédé suivant l'une quelconque des revendications précédentes, dans lequel le four de fusion (10) est un four à verre, de préférence un four à verre de type float.

5. Procédé suivant l'une quelconque des revendications précédentes, dans lequel on utilise comme carburant pour la turbine à gaz (41, 42) une partie du combustible gazeux (60) préchauffé issu de l'échangeur primaire (20).

6. Installation de fusion comportant :
• un four (10) définissant une chambre de fusion chauffée par combustion, ladite chambre de fusion du four (10) comportant au moins une sortie de fumées (13) générées par la combustion,
• un échangeur de chaleur primaire (20) pour le préchauffage, par échange thermique avec un fluide caloporteur (44), d'oxygène de combustion (52) et/ou de combustible gazeux (60) en amont de la chambre de fusion du four (10), ledit échangeur primaire (20) présentant (a) une entrée (21) et une sortie (22) de fluide caloporteur (44) et (b) une entrée (23) et une sortie (24) d'oxygène de combustion (52) et/ou une entrée (25) et une sortie (26) de combustible gazeux (60),
• un échangeur de chaleur secondaire (30) pour le chauffage d'air comprimé par échange thermique avec les fumées issues de la chambre de fusion du four (10), ledit échangeur secondaire (30) présentant (a) une entrée (35) et une sortie (36) d'air comprimé et (b) une entrée (31) et une sortie (32) de fumées,
• un premier compresseur d'air (34), ledit compresseur d'air (34) étant relié à l'entrée d'air comprimé (35) de l'échangeur secondaire (30), installation dans laquelle :
• l'entrée de fumées (31) de l'échangeur secondaire (30) est reliée à une sortie de fumées (13) de la chambre de fusion du four (10),
• la sortie d'oxygène de combustion (24) de l'échangeur primaire (20) est reliée à au moins un injecteur de comburant de la chambre de fusion du four (10) et/ou la sortie de combustible gazeux (26) de l'échangeur primaire (20) est reliée à au moins un injecteur de combustible gazeux de la chambre de fusion du four (10),
et **caractérisée en ce que**:
• l'installation comporte également une turbine à gaz (41, 42) comportant une tuyère d'admission d'air et un échappement, la sortie d'air comprimé (36) de l'échangeur secondaire (30) étant reliée à la tuyère d'admission d'air de la turbine à gaz (41,42), l'échappement de la turbine à gaz (41, 42) étant relié à l'entrée de fluide caloporteur (21) de l'échangeur primaire (20), de manière à fournir du gaz d'échappement (44) de la turbine à gaz (41, 42) comme fluide caloporteur (44) à l'échangeur primaire(20).

7. Installation suivant la revendication 6, dans laquelle la turbine à gaz (41, 42) fournit de l'énergie mécanique et/ou électrique à au moins un compresseur d'air (34).

8. Installation suivant la revendication 7, dans laquelle la turbine à gaz (41, 42) fournit de l'énergie mécanique à au moins un compresseur d'air (34) au moyen d'un arbre de transmission (45).

9. Installation suivant la revendication 7 ou 8, dans laquelle la turbine à gaz (41, 42) fournit de l'énergie mécanique et/ou électrique à au moins un compresseur d'air choisi parmi : le premier compresseur d'air (34), un second compresseur d'air qui alimente une unité de séparation des gaz de l'air (50) et un autre compresseur d'air.

10. Installation suivant la revendication 9, dans laquelle la turbine à gaz (41, 42) fournit de l'énergie mécanique ou électrique à une unité de séparation des gaz de l'air (50) présentant une sortie d'oxygène (52) reliée à au moins un injecteur de comburant de la chambre de fusion du four (10).

11. Installation suivant la revendication 10, dans laquelle la sortie d'oxygène (52) de l'unité de séparation des gaz de l'air (50) est reliée à l'entrée d'oxygène de combustion (23) de l'échangeur primaire (20).

12. Installation suivant l'une quelconque des revendications 6 à 11, dans laquelle la sortie d'oxygène de combustion (24) de l'échangeur primaire (20) est reliée à au moins un injecteur de comburant intégré dans un brûleur de la chambre de fusion du four (10) et/ou la sortie de combustible gazeux (26) de l'échangeur primaire (20) est reliée à au moins un injecteur de combustible intégré dans un brûleur de la chambre de fusion du four (10).

13. Installation suivant l'une quelconque des revendications 6 à 12, dans laquelle la sortie d'oxygène de combustion (24) de l'échangeur primaire (20) est reliée à au moins un injecteur de comburant intégré dans une lance de comburant de la chambre de fusion du four (10) et/ou la sortie de combustible gazeux (26) de l'échangeur primaire (20) est reliée à au moins un injecteur de combustible intégré dans une lance de combustible de la chambre de fusion du four (10).

14. Installation suivant l'une quelconque des revendications 6 à 13, dans laquelle le four de fusion (10) est un four à verre, de préférence un four à verre de type float.

15. Utilisation d'une installation suivant l'une quelconque des revendications 6 à 14 dans un procédé suivant la revendication 1.

## Patentansprüche

1. Verfahren zum Schmelzen in einem Ofen (10), eine Schmelzkammer umfassend, wobei man bei dem Verfahren:
- zumindest ein Verbrennungsreagenz, das aus Sauerstoff (52) und gasförmigem Brennstoff (60) ausgewählt wird, vor der Schmelzkammer des Ofens (10) durch Wärmetausch mit einem Wärmeträgergas (44) in einem Primärwärmetauscher (20) vorwärmt, mit Erhalt von zumindest einem vorgewärmten Verbrennungsreagenz und von temperiertem Wärmeträgergas,
- die Schmelzkammer des Ofens (10) mittels Verbrennung durch die Verwendung zumindest eines vorgewärmten Verbrennungsreagenz (52, 60) erhitzt, wodurch Wärmeenergie und Rauchgase in der Schmelzkammer des Ofens (10) entstehen,
- die Rauchgase aus der Schmelzkammer des Ofens (10) abführt, und man sie in einen Sekundärwärmetauscher (30) einbringt, um Druckluft durch Wärmetausch mit den abgeführten Rauchgasen aus der Schmelzkammer des Ofens (10) zu erhitzen,
**dadurch gekennzeichnet, dass**:
- man mechanische und/ oder elektrische Energie und einen gasförmigen Ausstrom mittels einer Gasturbine (41, 42) erzeugt, indem man die erhitzte Druckluft (46) aus dem Sekundärwärmetauscher (30) als Oxidationsmittel für die Gasturbine (41, 42) verwendet, und
- man den gasförmigen Ausstrom aus der Gasturbine (41, 42) als Wärmeträgergas (44) zum Vorwärmen des Verbrennungssauerstoffs (52) und/ oder des gasförmigen Brennstoffes (60) im Primärtauscher (20) verwendet.

2. Verfahren nach dem vorherigen Anspruch, wobei die mechanische und/ oder elektrische Energie, die durch die Gasturbine (41, 42) erzeugt wird, zumindest teilweise einem oder mehreren Luftverdichtern (34) geliefert wird.

3. Verfahren nach Anspruch 2, wobei zumindest ein Teil der mechanischen und/ oder elektrischen Energie, die durch die Gasturbine (41, 42) erzeugt wird, zumindest einem Luftverdichter geliefert wird, der aus den Folgenden ausgewählt wird: einem Luftverdichter (34), der den Sekundärwärmetauscher (30) versorgt, einem Luftverdichter, der eine Einheit zur Luftzerlegung (50) versorgt und einem weiteren Luftverdichter.

4. Verfahren nach einem der vorherigen Ansprüche, wobei der Schmelzofen (10) ein Glasschmelzofen, vorzugsweise ein Floatglas-Schmelzofen, ist.

5. Verfahren nach einem der vorherigen Ansprüche, wobei man als Kraftstoff für die Gasturbine (41, 42) einen Teil des vorgewärmten gasförmigen Brennstoffes (60) aus dem Primärtauscher (20) verwendet.

6. Schmelzanlage, Folgendes umfassend:
- einen Ofen (10), der eine Schmelzkammer definiert, die durch Verbrennung erhitzt wird, wobei die Schmelzkammer des Ofens (10) zumindest einen Auslass für Rauchgase (13) umfasst, die durch die Verbrennung entstehen,
- einen Primärwärmetauscher (20) zum Vorwärmen von Verbrennungssauerstoff (52) und/ oder von gasförmigem Brennstoff (60) durch Wärmetausch mit einem Wärmeträgerfluid (44) vor der Schmelzkammer des Ofens (10), wobei der Primärtauscher (20) (a) einen Eingang (21) und einen Ausgang (22) für Wärmeträgerfluid (44) und (b) einen Eingang (23) und einen Ausgang (24) für Verbrennungssauerstoff (52) und/ oder einen Eingang (25) und einen Ausgang (26) für gasförmigen Brennstoff (60) aufweist,
- einen Sekundärwärmetauscher (30) zum Erhitzen von Druckluft durch Wärmetausch mit den Rauchgasen aus der Schmelzkammer des Ofens (10), wobei der Sekundärwärmetauscher (30) (a) einen Eingang (35) und einen Ausgang (36) für Druckluft und (b) einen Eingang (31) und einen Ausgang (32) für Rauchgase aufweist,
- einen ersten Luftverdichter (34), wobei der Luftverdichter (34) mit dem Eingang für Druckluft (35) des Sekundärtauschers (30) verbunden ist,
Anlage, in der:
- der Eingang für Rauchgase (31) des Sekundärtauschers (30) mit einem Ausgang für Rauchgase (13) der Schmelzkammer des Ofens (10) verbunden ist,
- der Ausgang für Verbrennungssauerstoff (24) des Primärtauschers (20) mit zumindest einem Injektor für Oxidationsmittel der Schmelzkammer des Ofens (10) verbunden ist, und/ oder der Ausgang für gasförmigen Brennstoff (26) des Primärtauschers (20) mit zumindest einem Injektor für gasförmigen Brennstoff der Schmelzkammer des Ofens (10) verbunden ist,
und **dadurch gekennzeichnet, dass**:
- die Anlage auch eine Gasturbine (41, 42) umfasst, die eine Lufteinlassdüse und einen Auslass umfasst, wobei der Ausgang für Druckluft (36) des Sekundärtauschers (30) mit der Lufteinlassdüse der Gasturbine (41, 42) verbunden ist, wobei der Auslass der Gasturbine (41, 42) mit dem Eingang für Wärmeträgerfluid (21) des Primärtauschers (20) verbunden ist, um dem Primärtauscher (20) Abgas (44) aus der Gasturbine (41, 42) als Wärmeträgerfluid (44) zu liefern.

7. Anlage nach Anspruch 6, wobei die Gasturbine (41, 42) zumindest einem Luftverdichter (34) mechanische und/ oder elektrische Energie liefert.

8. Anlage nach Anspruch 7, wobei die Gasturbine (41, 42) zumindest einem Luftverdichter (34) über eine Antriebswelle (45) mechanische Energie liefert.

9. Anlage nach Anspruch 7 oder 8, wobei die Gasturbine (41, 42) zumindest einem Luftverdichter mechanische und/ oder elektrische Energie liefert, der aus den Folgenden ausgewählt wird: dem ersten Luftverdichter (34), einem zweiten Luftverdichter, der eine Einheit zur Luftzerlegung (50) versorgt und einem weiteren Luftverdichter.

10. Anlage nach Anspruch 9, wobei die Gasturbine (41, 42) einer Einheit zur Luftzerlegung (50) mechanische oder elektrische Energie liefert, die einen Sauerstoffausgang (52) aufweist, der mit zumindest einem Injektor für Oxidationsmittel der Schmelzkammer des Ofens (10) verbunden ist.

11. Anlage nach Anspruch 10, wobei der Sauerstoffausgang (52) der Einheit zur Luftzerlegung (50) mit dem Eingang für Verbrennungssauerstoff (23) des Primärtauschers (20) verbunden ist.

12. Anlage nach einem der Ansprüche 6 bis 11, wobei der Ausgang für Verbrennungssauerstoff (24) des Primärtauschers (20) mit zumindest einem Injektor für Oxidationsmittel verbunden ist, der in einen Brenner der Schmelzkammer des Ofens (10) integriert ist, und/ oder der Ausgang für gasförmigen Brennstoff (26) des Primärtauschers (20) mit zumindest einem Injektor für Brennstoff verbunden ist, der in einen Brenner der Schmelzkammer des Ofens (10) integriert ist.

13. Anlage nach einem der Ansprüche 6 bis 12, wobei der Ausgang für Verbrennungssauerstoff (24) des Primärtauschers (20) mit zumindest einem Injektor für Oxidationsmittel verbunden ist, der in eine Oxidationsmittellanze der Schmelzkammer des Ofens (10) integriert ist, und/ oder der Ausgang für gasförmigen Brennstoff (26) des Primärtauschers (20) mit zumindest einem Injektor für Brennstoff verbunden ist, der in eine Brennstofflanze der Schmelzkammer des Ofens (10) integriert ist.

14. Anlage nach einem der Ansprüche 6 bis 13, wobei der Schmelzofen (10) ein Glasschmelzofen, vorzugsweise ein Floatglas-Schmelzofen, ist.

15. Verwendung einer Anlage nach einem der Ansprüche 6 bis 14 in einem Verfahren nach Anspruch 1.

## Claims

1. Method for melting in a furnace (10) comprising a melting chamber, method wherein:
- at least one combustion reagent is preheated chosen from oxygen (52) and the gaseous fuel (60) upstream of the melting chamber of the furnace (10) by heat exchange with a heat transfer gas (44) in a primary heat exchanger (20), with the obtaining of at least one preheated combustion reagent and of the tempered heat transfer gas,
- the melting chamber of the furnace (10) is heated by means of combustion by using at least one heated combustion reagent (52, 60), as such generating the heat energy and fumes in the melting chamber of the furnace (10),
- the fumes of the melting chamber of the furnace (10) are removed and they are introduced into a secondary heat exchanger (30) in order to heat the compressed air via heat exchange with the fumes removed from the melting chamber of the furnace (10)
**characterised in that**:
- mechanical and/or electrical energy and a gaseous effluent are generated by means of a gas turbine (41, 42) by using heat compressed air (46) coming from the secondary exchanger (30) as oxidant for the gas turbine (41, 42), and
- the gaseous effluent of the gas turbine (41, 42) is used as heat transfer gas (44) for the preheating the combustion oxygen (52) and/or the gaseous fuel (60) in the primary exchanger (20).

2. Method according to the preceding claim, wherein the mechanical and/or electrical energy generated by the gas turbine (41, 42) is at least partially supplied to one or several air compressors (34).

3. Method according to claim 2, wherein at least one portion of the mechanical and/or electrical energy generated by the gas turbine (41, 42) is supplied to at least one air compressor chosen from: an air compressor (34) that supplies the secondary heat exchanger (30), an air compressor that supplies a unit for separating gases from the air (50) and another air compressor.

4. Method according to any of the preceding claims, wherein the melting furnace (10) is a glass furnace, preferably a glass furnace of the float type.

5. Method according to any of the preceding claims, wherein a portion of the preheated gaseous fuel (60) coming from the primary exchanger (20) is used as a fuel for the gas turbine (41, 42).

6. Installation for melting comprising:
- a furnace (10) defining a melting chamber heated via combustion, said melting chamber of the furnace (10) comprising at least one outlet of fumes (13) generated by the combustion,
- a primary heat exchanger (20) for the preheating, by heat exchange with a heat transfer fluid (44), of combustion oxygen (52) and/or of gaseous fuel (60) upstream of the melting chamber of the furnace (10), said primary exchanger (20) having (a) an inlet (21) and an outlet (22) of heat transfer fluid (44) and (b) an inlet (23) and an outlet (24) of combustion oxygen (52) and/or an inlet (25) and an outlet (26) of gaseous fuel (60),
- a secondary heat exchanger (30) for the heating of compressed air by heat exchange with the fumes coming from the melting chamber of the furnace (10), said secondary exchanger (30) having (a) an inlet (35) and an outlet (36) of compressed air and (b) an inlet (31) and an outlet (32) of fumes,
- a first air compressor (34), said air compressor (34) being connected to the compressed air inlet (35) of the secondary exchanger (30),
installation wherein:
- the fume inlet (31) of the secondary exchanger (30) is connected to a fume outlet (13) of the melting chamber of the furnace (10),
- the combustion oxygen outlet (24) of the primary exchanger (20) is connected to at least one oxidant injector of the melting chamber of the furnace (10) and/or the outlet of gaseous fuel (26) of the primary exchanger (20) is connected to at least one gaseous fuel injector of the melting chamber of the furnace (10),
and **characterised in that**:
- the installation also comprises a gas turbine (41, 42) comprising an air intake nozzle and an outlet, with the compressed air outlet (36) of the secondary exchanger (30) being connected to the air intake nozzle of the gas turbine (41,42), with the outlet of the gas turbine (41,42) being connected to the inlet of heat transfer fluid (21) of the primary exchanger (20), in such a way as to provide exhaust gas (44) from the gas turbine (41, 42) as heat transfer fluid (44) to the primary exchanger (20).

7. Installation according to claim 6, wherein the gas turbine (41, 42) supplies mechanical and/or electrical energy to at least one air compressor (34).

8. Installation according to claim 7, wherein the gas turbine (41, 42) supplies mechanical energy to at least one air compressor (34) by means of a drive shaft (45).

9. Installation according to claim 7 or 8, wherein the gas turbine (41, 42) supplies mechanical and/or electrical energy to at least one air compressor chosen from: the first air compressor (34), a second air compressor that supplies a unit for separating gases from the air (50) and another air compressor.

10. Installation according to claim 9, wherein the gas turbine (41, 42) supplies mechanical or electrical energy to a unit for separating gases from the air (50) having an oxygen outlet (52) connected to at least oxidant injector of the melting chamber of the furnace (10).

11. Installation according to claim 10, wherein the oxygen outlet (52) of the unit for separating gases from the air (50) is connected to the combustion oxygen inlet (23) of the primary exchanger (20).

12. Installation according to any of claims 6 to 11, wherein the combustion oxygen outlet (24) of the primary exchanger (20) is connected to at least one oxidant injector integrated into a burner of the melting chamber of the furnace (10) and/or the gaseous fuel outlet (26) of the primary exchanger (20) is connected to at least one fuel injector integrated into a burner of the melting chamber of the furnace (10).

13. Installation according to any of claims 6 to 12, wherein the combustion oxygen outlet (24) of the primary exchanger (20) is connected to at least one oxidant injector integrated into a oxidant lance of the melting chamber of the furnace (10) and/or the gaseous fuel outlet (26) of the primary exchanger (20) is connected to at least one fuel injector integrated into a fuel lance of the melting chamber of the furnace (10).

14. Installation according to any of claims 6 to 13, wherein the melting furnace (10) is a glass furnace, preferably a glass furnace of the float type.

15. Use of an installation according to any of claims 6 to 14 in a method according to claim 1.
